# EUROPEAN PATENT SPECIFICATION

(11) **EP 3 636 081 B1**
(45) Date of publication and mention of the grant of the patent: **05.11.2025**
(21) Application number: 18802145.5
(22) Date of filing: 04.04.2018
(51) Int. Cl.: A23L 33/10, A23L 2/00, A23L 2/52, A23L 29/00, A23L 33/105, A23L 33/175

(54) **FOOD COMPOSITION**
LEBENSMITTELZUSAMMENSETZUNG
COMPOSITION ALIMENTAIRE

(30) Priority: 18.05.2017 JP 2017098623
(43) Date of publication of application: 15.04.2020
(73) Proprietor: Kao Corporation, Tokyo 103-8210 (JP)
(72) Inventor: OZATO, Naoki, Tokyo 131-8501 (JP); UCHIDA, Hiroko, Tokyo 131-8501 (JP); SHIRAHATA, Noboru, Tokyo 131-8501 (JP)
(74) Representative: Hoffmann Eitle
(86) International application number: PCT/JP2018/014375
(87) International publication number: WO 2018/211845

(56) References cited:
- EP-A1- 2 880 988
- WO-A1-2014/024470
- JP-A- 2003 274 896
- JP-A- 2004 049 200
- JP-A- 2006 333 806
- JP-A- 2009 165 498
- JP-A- 2010 075 183
- JP-A- 2010 148 453
- JP-A- 2011 125 284
- JP-A- 2012 095 647
- JP-A- 2013 143 930
- JP-A- 2014 039 478
- JP-A- 2016 026 473
- JP-A- H04 281 742
- JP-A- H11 103 778
- ANONYMUS: "Tryptophan", WIKIPEDIA, 1 January 2023 (2023-01-01), XP93048440, Retrieved from the Internet <URL:https://de.wikipedia.org/wiki/Tryptophan> [retrieved on 20230522]
- ANONYMOUS: "CAS Common Chemistry L-Tryptophan", 1 January 2023 (2023-01-01), XP93048433, Retrieved from the Internet <URL:https://commonchemistry.cas.org/detail?cas_rn=73-22-3> [retrieved on 20230522]
- FUKUSHIMA, Y. ET AL.: "Coffee and Green Tea As a Large Source of Antioxidant Polyphenols in the Japanese Population", JOURNAL OF AGRICULTURAL AND FOOD CHEMISTRY, vol. 57, no. 4, 2009, pages 1253 - 1259, XP055613090

## Description

### Field of the Invention

The present invention relates to a food composition.

### Background of the Invention

Chlorogenic acids are a compound in which caffeic acid is bonded to a hydroxyl group at the 3-position of quinic acid, and it is known that chlorogenic acids have physiological effects such as antioxidant action and blood pressure lowering action. Thus, although chlorogenic acids are a useful substance, they have a foreign taste such as bitterness or astringent taste, which may cause a trouble in continuous ingestion. Conventionally, as a technique for masking the bitterness of chlorogenic acids, it has been proposed to add, to (a) 20 to 150 mg/100mL of chlorogenic acids, one or more amino acids selected from the group consisting of (b) 500 mg/100mL or less of L-ornithine hydrochloride, 83 mg/100mL or less of D,L-alanine, and 500mg/100mL or less of glycine so that the mass ratio, [(b)/(a)], is 1.0 or more (Patent Document 1).

Meanwhile, L-tryptophan is one of essential amino acids in humans and is known to be metabolized to serotonin and melatonin in vivo. Thus, although L-tryptophan is an indispensable substance for maintaining human health, it cannot be synthesized in vivo. Therefore, although it is necessary to ingest it from food and drink, it is reported that the bitterness is strong and its bitterness intensity is very close to quinine known as a bitterness substance (Non-Patent Document 1). It has also been reported that even when 0.021 to 0.5% by mass of L-tryptophan is added to 0.056 to 0.0084% by mass of chlorogenic acids, bitterness is strongly felt and the masking effect to the bitterness of chlorogenic acids are insufficient (Patent Document 1).

JP 2011 125284 A describes a packed coffee beverage containing a neutral amino acid of 0.005-1 mass% and creatine.

EP 2 880 988 A1 describes a coffee substitute prepared by subjecting a raw material composition formed by combining an amino acid, chlorogenic acid and sugar to a roasting process.

[Patent Document 1] JP-A-2010-148453
[Non-Patent Document 1] Journal of the Institute of Electrostatics, Vol. 26, No. 3, p. 108-113 (2002)

### Summary of the Invention

That is, the present invention provides a food composition, comprising following components (A) and (B);
(A) 0.001% by mass or more of chlorogenic acids, and
(B) L-tryptophan,
wherein a mass ratio of component (A) and component (B), [(B)/(A)], is from 0.00005 to 0.03.

The present invention also provides the use of food composition comprising components (A) and (B) for suppressing astringent taste of chlorogenic acids and bitterness of L-tryptophan, wherein
(A) is 0.001% by mass or more of chlorogenic acids, and
(B) is L-tryptophan
and components (A) and (B) are contained such that a mass ratio, [(B)/(A)], falls within a range of 0.00005 to 0.03.

### Detailed Description of the Invention

The present invention relates to a food composition containing chlorogenic acids with reduced foreign taste.

The present inventors surprisingly found that by containing L-tryptophan having a bitterness in a specific mass ratio to chlorogenic acids having an astringent taste, it is possible to suppress the astringent taste of chlorogenic acids while suppressing the bitterness of L-tryptophan.

According to the present invention, it is possible to provide a food composition in which the bitterness of L-tryptophan is suppressed and the astringent taste of chlorogenic acids is also suppressed. Therefore, the food composition of the present invention is effective for continuously ingesting chlorogenic acids, and the physiological effect of the chlorogenic acids can be sufficiently expected.

### Food composition

The food composition of the present invention may be, for example, in solid form or in liquid form (beverage), and may take any suitable form. For example, when the food composition of the present invention is a solid food composition, its shape is not particularly limited as long as it is solid at normal temperature (20 °C ±15 °C), and various shapes such as powder, granular, tablet, rod, plate, block, and the like can be used. The size of the solid food composition of the present invention can be appropriately selected according to the form of the food composition as long as it can be chewed and ingested. The solids in the solid food composition of the present invention is usually 95% by mass or more, preferably 97% by mass or more. The upper limit of the solids are not particularly limited, and may be 100% by mass. Here, in the present specification, the "solids" refers to the mass of a residue obtained by drying a sample in an electric thermostat dryer at 105° C for 3 hours to remove volatile substances.

When the food composition of the present invention is a beverage, single strength is preferable from the viewpoint of convenience. Here, in the present specification, the term "single strength" refers to a beverage that can be drinked as it is without dilution. The pH of the beverage is preferably from 2.0 to 8.0, more preferably from 2.5 to 7.0, more preferably from 2.6 to 6.5, more preferably from 3.0 to 5.5, particularly preferably from 3.0 to 5.0, from the viewpoint of stability and taste and flavor.

The food composition of the present invention contains chlorogenic acids as component (A). As used herein, the term "chlorogenic acids" is a generic term for the monocaffeoylquinic acids of 3-caffeoylquinic acid, 4-caffeoylquinic acid, and 5-caffeoylquinic acid, the monoferuloylquinic acids of 3-feruloylquinic acid, 4-feruloylquinic acid, and 5-feruloylquinic acid, and the dicaffeoylquinic acids of 3,4-dicaffeoylquinic acid, 3,5-dicaffeoylquinic acid, and 4,5-dicaffeoylquinic acid. In the present invention, at least one of the above nine species may be contained, but it is preferable to contain all of the above nine species from the viewpoint that an extract derived from a plant can be used.

The chlorogenic acids may be in the form of salts or hydrates. The salt is not particularly limited as long as it is physiologically acceptable, and examples thereof include an alkali metal salt, an alkaline earth metal salt, an ammonium salt, an organic amine salt, and the like. Examples of the alkali metal salt include a sodium salt and a potassium salt, and examples of the alkaline earth metal salt include a calcium salt and a magnesium salt. Examples of organic amine salt include triethylamine salt, triethanolamine salt, and monoethanolamine salt. Among these salts, an alkali metal salt and an alkaline earth metal salt are preferable.

As the component (A), a commercially available reagent may be used, or an extract of a plant rich in the component (A) or a purified product thereof may be used.

The plant is not particularly limited as long as the component (A) is contained therein, and for example, one or more selected from the group consisting of sunflower seed, unripe apple, coffee bean, leaves of Simonbatatas, cones of Pinaceae plants, seedhusks of Pinaceae plants, sugar cane, leaves of Nandina domestica, burdock, the skin of eggplant, the fruit of Japanese apricot, coltsfoot, and Vitaceae plants can be mentioned. Among them, an extract of coffee beans is preferable from the viewpoint of the content of chlorogenic acids and the like.

The kind of coffee beans may be any of Coffee Arabica, Coffee Robusta, Coffee Liberica and Coffee Arabusta. Examples of the place where the coffee beans are produced include Brazil, Colombia, Tanzania, Mocha, Kilimanjaro, Mandheling, Blue Mountain, Guatemala, Vietnam, and Indonesia. In the present invention, two or more of coffee beans having different bean species and different production regions can be mixed and used.

The coffee beans used for extraction may be raw coffee beans, roasted coffee beans, or a combination thereof. The roasted coffee beans are preferably lightly-roasted coffee beans in view of the content of chlorogenic acids. The L value of the lightly-roasted coffee beans can be appropriately selected, but is preferably 27 or more and less than 62, more preferably 29 to 60, and more preferably 35 to 55. The term "L value" as used herein refers to a value determined by measuring a lightness value of roasted coffee beans using a colorimeter, if the L value of black is regarded as 0 and the L value of white is regarded as 100, respectively. The roasting method is not particularly limited, and a known method can be employed, and the roasting conditions can be appropriately selected so as to obtain roasted coffee beans having a desired L value. The coffee beans used for extraction may be unground or ground.

The extraction method and extraction conditions thereof are not particularly limited, and a method disclosed in, for example, JP-A-58-138347, JP-A-59-51763, JP-A-62-111671, and JP-A-5-236918 may be adopted. In addition, a purification method is not particularly limited, and a known method may be employed. For example, various chromatography such as ion chromatography, molecular sieving chromatography, and reversed phase chromatography may be performed singly or in combination in any order.

The content of the component (A) in the food composition of the present invention is 0.001% by mass or more, and is preferably 0.01% by mass or more, more preferably 0.03% by mass or more from the viewpoint of physiological activity, and is more preferably 90% by mass or less, more preferably 70% by mass or less, more preferably 60% by mass or less, and particularly more preferably 50% by mass or less from the viewpoint of suppression of astringent taste. The range of the component (A) is preferably from 0.001 to 90% by mass, more preferably from 0.01 to 70% by mass, more preferably from 0.03 to 60% by mass, and particularly more preferably from 0.03 to 50% by mass in the food composition. Here, in the present specification, the content of the component (A) is defined on the basis of the total amount of the above nine kinds. When the component (A) is a salt or a hydrate, the content of the component (A) is a value converted into chlorogenic acids which are free acids. The analysis of the component (A) can be measured by, for example, an analysis method suitable for the situation of a measurement sample among commonly known measurement methods, and can include, for example, an analysis method described in the following examples.

The content of the component (A) in the food composition of the present invention can be appropriately selected according to the form of the food composition.

For example, when the food composition is a solid food composition, the content of the component (A) in the solid food composition is preferably 5% by mass or more, more preferably 7% by mass or more, more preferably 10% by mass or more, and is preferably 90% by mass or less, more preferably 75% by mass or less, more preferably 50% by mass or less, and particularly preferably 35% by mass or less from the viewpoint of suppressing astringent taste. The content of the component (A) is preferably from 5 to 90% by mass, more preferably from 7 to 75% by mass, more preferably from 10 to 50% by mass, and particularly more preferably from 10 to 35% by mass in the solid food composition.

When the food composition of the present invention is a beverage, the content of the component (A) in the beverage is preferably 0.001% by mass or more, more preferably 0.01% by mass or more, more preferably 0.03% by mass or more, particularly preferably 0.039% by mass or more, and is preferably 3.0% by mass or less, more preferably 1.0% by mass or less, more preferably 0.5% by mass or less, more preferably 0.15% by mass or less, and particularly preferably 0.1% by mass or less, from the viewpoint of suppression of astringent taste. The content of the component (A) is preferably from 0.001 to 3.0% by mass, more preferably from 0.01 to 1.0% by mass, more preferably from 0.03 to 0.5% by mass, more preferably from 0.03 to 0.15% by mass, more preferably from 0.03 to 0.1% by mass, and particularly more preferably from 0.039 to 0.1% by mass in the beverage.

The food composition of the present invention contains L-tryptophan as component (B) in order to suppress astringent taste of chlorogenic acids. Component (B) maybe naturally derived, chemically synthesized or even commercially available. Naturally-derived products include extracts of plants rich in component (B) and purified products thereof. The plant is not particularly limited as long as it contains the component (B), and for example, beans such as azuki beans (Vigna angularis) and kidney beans, and potatoes such as Colocasia esculenta can be cited. The extraction method and extraction conditions are not particularly limited, and a known method can be employed, and the purification method is not particularly limited, and for example, the above-mentioned method can be employed.

The content of component (B) in the food composition of the present invention is preferably 0.00000001% by mass or more, more preferably 0.0000001% by mass or more, more preferably 0.0000005% by mass or more, particularly more preferably 0.0000015% by mass or more from the standpoint of suppressing bitterness, and is preferably 1.0% by mass or less, more preferably 0.25% by mass or less, and more preferably 0.15% by mass or less from the standpoint of suppressing astringent taste. The content of such component (B) is preferably from 0.00000001 to 1.0% by mass, more preferably from 0.0000001 to 0.25% by mass, more preferably from 0.0000005 to 0.15% by mass, and particularly more preferably from 0.0000015 to 0.15% by mass in the food composition.

The content of the component (B) in the food composition of the present invention can be appropriately selected in accordance with the form of the food composition.

For example, when the food composition is a solid food composition, the content of the component (B) in the solid food composition is preferably 0.001% by mass or more, more preferably 0.003% by mass or more, and more preferably 0.01% by mass or more from the viewpoint of suppressing bitterness, and is preferably 1.0% by mass or less, more preferably 0.35% by mass or less, even more preferably 0.20% by mass or less, and particularly preferably 0.12% by mass or less, from the viewpoint of suppressing astringent taste. The content of the component (B) is preferably from 0.001 to 1.0% by mass, more preferably from 0.003 to 0.35% by mass, more preferably from 0.01 to 0.20% by mass, and particularly more preferably from 0.01 to 0.12% by mass in the solid food composition.

When the food composition of the present invention is a beverage, the content of component (B) in the beverage is preferably 0.01 ppm by mass or more, more preferably 0.1 ppm by mass or more, more preferably 0.5 ppm by mass or more, particularly preferably 2.0 ppm by mass or more from the viewpoint of suppressing bitterness, and is preferably 100 ppm by mass or less, more preferably 50 ppm by mass or less, more preferably 30 ppm by mass or less, and particularly preferably 25 ppm by mass or less from the viewpoint of suppressing astringent taste. The content of the component (B) is preferably from 0.01 to 100 ppm by mass, more preferably from 0.1 to 50 ppm by mass, more preferably from 0.5 to 30 ppm by mass, and particularly preferably from 2.0 to 25 ppm by mass in the beverage. The analysis of the component (B) can be performed by, for example, an analysis method suitable for the situation of a measurement sample among commonly known measurement methods, and can include, for example, an analysis method described in the following examples.

The food composition of the present invention may be a concentrated beverage. In the case of a concentrated beverage, when the reduced beverage is prepared by diluting in accordance with a prescribed usage, the content of each of the component (A) and the component (B) in the reduced beverage and the pH may satisfy the above requirements.

Amass ratio of the component (A) and the component (B), [(B)/(A)], in the food composition of the present invention is from 0.00005 to 0.03, and from the viewpoint of suppressing bitterness, 0.0001 or more is preferable, 0.0005 or more is more preferable, 0.0009 or more is more preferable, and from the viewpoint of suppressing astringent taste, 0.01 or less is more preferable, and 0.007 or less is more preferable. The range of the mass ratio [(B)/(A)] is preferably from 0.0001 to 0.01, more preferably from 0.0005 to 0.007, and more preferably from 0.0015 to 0.007.

The mass ratio [(B)/(A)] of the food composition of the present invention can be appropriately selected in accordance with the form of the food composition.

For example, when the food composition is a solid food composition, the mass ratio [(B)/ (A)] is preferably 0.0001 or more, more preferably 0.0005 or more, and more preferably 0.0009 or more from the viewpoint of suppressing bitterness. The mass ratio [(B)/(A) ] is 0.03 or less. From the viewpoint of suppressing astringent taste, 0.015 or less is preferable, 0.010 or less is more preferable, 0.007 or less is more preferable, 0.005 or less is more preferable, and 0.004 or less is particularly preferable. The range of the mass ratio [(B)/(A)] is preferably from 0.0001 to 0.03, more preferably from 0.0005 to 0.015, even more preferably from 0.0005 to 0.010, even more preferably from 0.0005 to 0.007, even more preferably from 0.0009 to 0.005, and particularly preferably from 0.0009 to 0.004.

When the food composition of the present invention is a beverage, the mass ratio [(B)/ (A)] is preferably 0.0001 or more, more preferably 0.0005 or more, more preferably 0.001 or more, more preferably 0.0015 or more, and particularly preferably 0.003 or more from the viewpoint of suppressing bitterness. The mass ratio [(B)/(A)] is 0.03 or less. From the viewpoint of suppressing astringent taste, 0.009 or less is preferable, and 0.007 or less is more preferable. The range of such mass ratio [(B)/(A)] is preferably from 0.0001 to 0.03, more preferably from 0.0005 to 0.009, more preferably from 0.001 to 0.009, even more preferably from 0.0015 to 0.007, and particularly preferably from 0.003 to 0.007.

Furthermore, the food composition of the present invention is also suitable in the following embodiments.

When the food composition of the present invention is a solid food composition, from the viewpoint of suppression of bitterness and astringent taste, it is preferable that the content of the component (A) is from 10 to 50 % by mass, the content of the component (B) is from 0.01 to 0.35 % by mass, the mass ratio [(B)/(A)] is from 0.0005 to 0.007, and it is more preferable that the content of the component (A) is from 10 to 35 % by mass, the content of the component (B) is from 0.01 to 0.20 % by mass, and the mass ratio [(B)/ (A)] is from 0.0009 to 0.005.

When the food composition of the present invention is a beverage, from the viewpoint of suppression of bitterness and astringent taste, it is preferable that the content of the component (A) is from 0.01 to 0.1% by mass, the content of the component (B) is from 0.1 to 30 ppm by mass, the mass ratio [(B)/(A)] is from 0.001 to 0.009, and it is more preferable that the content of the component (A) is from 0.039 to 0.5% by mass, the content of the component (B) is from 2.0 to 25 ppm by mass, and the mass ratio [(B)/(A)] is from 0.0015 to 0.007.

The food composition of the present invention may contain one or more additives such as acidulants, sweeteners, amino acids (excluding L-tryptophan), proteins, vitamins, minerals, flavors, fruit juices, plant extracts, esters, pigments, milk constituents, cocoa powders, seasonings, vegetable fats or oils, antioxidants, preservatives, pH adjusters, quality stabilizers, and the like, as desired, in order to enhance palatability and the like. The content of the additive can be appropriately set within a range that does not impair the object of the present invention.

Further, when the food composition of the present invention is in a solid form, an acceptable carrier can be included as necessary. For example, it includes excipients (e.g., monosaccharides such as glucose, galactose, fructose, disaccharides such as sucrose, lactose, maltose, sugar alcohols such as xylitol, sorbitol, starch degradation products such as dextrin, syrup solid); binders (e.g., hydroxypropylmethylcellulose, hydroxypropylcellulose, gelatin, alphanated starch, polyvinylpyrrolidone, polyvinyl alcohol, pullulan, methylcellulose, hydrogenated oil, etc.) ; disintegrating agents (e.g., carmellose, carmellose calcium, carmellose sodium, crospovidone, corn starch, low substituted hydroxypropylcellulose, etc.); lubricants (e.g., calcium stearate, magnesium stearate, sucrose fatty acid esters, sodium stearyl fumarate, talc, silicon dioxide, etc.); flavoring substances (e.g., stevia, etc.); oligosaccharides, crystalline cellulose, light anhydrous silicic acid, calcium hydrogen phosphate, bulking agents, surfactants, dispersants, buffers, antioxidants, preservatives, quality stabilizers, diluents, and the like. The content of the carrier can be appropriately set within a range that does not impair the object of the present invention.

The food composition of the present invention can be produced in accordance with a conventional method, and can be produced by a suitable method. For example, it can be produced by mixing a specific amount of the component (A) and the component (B), and optionally a carrier and/or an additive so that the mass ratio [(B)/(A)] of the component (A) and the component (B) falls within the above range. The mixing order of the component (A) and the component (B) is not particularly limited, and one may be added to the other or both may be added simultaneously. As a mixing method, an appropriate method such as stirring or shaking can be adopted, and a mixing apparatus may be used. When the food composition of the present invention is in a solid form, it maybe subjected to compression molding to obtain a desired shape, or may be granulated by a known granulation method.

When the food composition of the present invention is a beverage, it can be provided by filling it in a conventional packaging container such as a molded container based on polyethylene terephthalate as the main component (so-called PET bottle), a metal can, a paper container compounded with a metal foil or a plastic film, a bottle, or the like. The beverage may also be subjected to heat sterilization, and for example, after filling it in a container such as a metal can, if heat sterilization is possible, it can be produced under the sterilization conditions specified in the corresponding law (in Japan, the Food Sanitation Act) . In the case of a container such as a PET bottle or a paper container to which retort sterilization cannot be applied, it is previously sterilized at a high temperature for a short time sterilization under the same conditions as aforementioned above, for example, by a plate-type heat exchanger or the like, is cooled to a predetermined temperature, and then is filling in a container.

### <Method for suppressing astringent taste of chlorogenic acids and bitterness of L-tryptophan>

A method for suppressing astringent taste of chlorogenic acids and bitterness of L-tryptophan using the food composition of the present invention is provided in which the following components (A) and (B):
(A) 0.001% by mass or more of chlorogenic acids, and
(B) L-tryptophan
are contained in the food composition such that a range of the mass ratio [(B)/(A)] falls within from 0.00005 to 0.03.

The suppression method is not particularly limited as long as the specified amount of component (A) and component (B) finally coexist in the food composition at a specified mass ratio. The timing of coexistence and the blending order are not limited. The form of the food composition is not particularly limited as long as it can be orally ingested, and may be solid or liquid. The specific configuration of the food composition and the specific configurations of the components (A) and (B) (for example, the respective contents, the mass ratio, and the like) are as described above.

The present invention further discloses the following FOOD COMPOSITIONS regarding the above-mentioned embodiment.
<1a-1> A solid food composition, comprising the following components (A) and (B);
   (A) 10 to 50% by mass of chlorogenic acids and
   (B) 0.01 to 0.35% by mass of L-tryptophan,
   wherein a mass ratio of component (A) and component (B), [(B)/(A)], is from 0.0005 to 0.007.
<1b-1> A solid food composition, comprising the following components (A) and (B);
   (A) 10 to 35% by mass of chlorogenic acids, and
   (B) 0.01 to 0.20% by mass of L-tryptophan,
   wherein a mass ratio of component (A) and component (B), [(B)/(A)], is from 0.0009 to 0.005.
<1-2> The solid food composition according to the above <1a-1>, wherein a content of the component (A) is preferably from 10 to 35% by mass.
<1-3> The solid food composition according to the above <1a-1> or <1-2> >, wherein a content of the component (B) is preferably from 0.01 to 0.20% by mass.
<1-4> The solid food composition according to the above <1a-1> or <1-2> >, wherein a content of the component (B) is preferably from 0.01 to 0.12% by mass.
<1-5> The solid food composition according to any one of the above <1a-1> and <1-2> to <1-4>, wherein the mass ratio [(B)/ (A)] is preferably from 0.0005 to 0.007.
<1-6> The solid food composition according to any one of the above <1a-1> and <1-2> to <1-4>, wherein the mass ratio [(B)/ (A)] is preferably from 0.0009 to 0.005.
<1-7> The solid food composition according to the above <1b-1>, wherein a content of the component (B) is preferably from 0.01 to 0.12% by mass.
<1-8> The solid food composition according to anyone of the above <1a-1>, <1b-1>, and<1-2> to <1-7>, wherein a form is preferablypowder, granular, tablet, rod, plate, or block.
<1-9> The solid food composition according to anyone of the above <1a-1>, <1b-1>, and <1-2> to <1-8>, wherein the component (A) is preferably at least one selected from the group consisting of 3-caffeoylquinic acid, 4-caffeoylquinic acid, 5-caffeoylquinic acid, 3-feruloylquinic acid, 4-feruloylquinic acid, 5-feruloylquinic acid, 3,4-dicaffeoylquinic acid, 3,5-dicaffeoylquinic acid, and 4,5-dicaffeoylquinic acid, and more preferably all nine of the above.
<2a-1> A liquid food composition, comprising the following components (A) and (B);
   (A) 0.01 to 0.1% by mass of chlorogenic acids, and
   (B) 0.1 to 30 ppm by mass of L-tryptophan
   wherein a mass ratio of component (A) and component (B), [(B)/(A)], is from 0.001 to 0.009.
<2b-1> A liquid food composition, comprising the following components (A) and (B);
   (A) 0.039 to 0.5% by mass of chlorogenic acids, and
   (B) 2.0 to 25 ppm by mass of L-tryptophan,
   wherein amass ratio of component (A) and component (B), [(B)/(A)], is from 0.0015 to 0.007.
<2-2> The liquid food composition according to the above <2a-1>, wherein a content of the component (A) is preferably from 0.03 to 0.1% by mass.
<2-3> The liquid food composition according to the above <2a-1>, wherein a content of the component (A) is preferably from 0.039 to 0.1% by mass.
<2-4> The liquid food composition according to any one of the above <2a-1>, <2-2>, and <2-3>, wherein a content of the component (B) is preferably from 0.5 to 30 ppm by mass.
<2-5> The liquid food composition according to any one of the above <2a-1>, <2-2>, and <2-3>, wherein a content of the component (B) is preferably from 2.0 to 25 ppm by mass.
<2-6> The liquid food composition according to any one of the above <2a-1> and <2-2> to <2-5>, wherein the mass ratio [(B) / (A)] is preferably from 0.0005 to 0.007.
<2-7> The liquid food composition according to any one of the above <2a-1> and <2-2> to <2-5>, wherein the mass ratio [(B) / (A)] is preferably from 0.0015 to 0.007.
<2-8> The liquid food composition according to the above <2b-1>, wherein a content of the component (A) is preferably from 0.039 to 0.15% by mass.
<2-9> The liquid food composition according to the above <2b-1>, wherein a content of the component (A) is preferably from 0.039 to 0.1% by mass.
<2-10> The liquid food composition according to any one of the above <2a-1>, <2b-1>, and <2-2> to <2-9>, wherein the pH is preferably from 3.0 to 5.5.
<2-11> The liquid food composition according to any one of the above <2a-1>, <2b-1>, and <2-2> to <2-9>, wherein the pH is preferably from 3.0 to 5.0.
<2-12> The liquid food composition according to any one of the above <2a-1>, <2b-1>, and<2-2>to<2-11>, wherein the composition is preferably a beverage (single strength).
<2-13> The liquid food compositions according to any one of the above <2a-1>, <2b-1>, and <2-2> to <2-12>, wherein component (A) is preferably at least one selected from the group consisting of 3-caffeoylquinic acid, 4-caffeoylquinic acid, 5-caffeoylquinic acid, 3-feruloylquinic acid, 4-feruloylquinic acid, 5-feruloylquinic acid, 3,4-dicaffeoylquinic acid, 3,5-dicaffeoylquinic acid and 4,5-dicaffeoylquinic acid, and more preferably all nine of the above.
<3-1> A solid food composition, comprising the following components (A) and (B);
   (A) 5% by mass or more of chlorogenic acids, and
   (B) L-tryptophan,
   wherein a mass ratio of component (A) and component (B), (B)/ (A)], is from 0.0005 to 0.007.
<3-2> The solid food composition according to the above <3-1>, wherein a content of the component (A) is preferably from 10 to 50% by mass.
<3-3> The solid food composition according to the above <3-1>, wherein a content of the component (A) is preferably from 10 to 35% by mass.
<3-4> The solid food composition according to any one of the above <3-1> to <3-3>, wherein a content of the component (B) is preferably from 0.01 to 0.20% by mass.
<3-5> The solid food composition according to any one of the above <3-1> to <3-3>, wherein a content of the component (B) is preferably from 0.01 to 0.12% by mass.
<3-6> The solid food composition according to any one of the above <3-1> to <3-5>, wherein the mass ratio [(B)/(A)] is preferably from 0.0009 to 0.005.
<3-7> The solid food composition according to any one of the above <3-1> to <3-6>, wherein solids are preferably 95% by mass or more, more preferably 97% by mass or more.
<3-8> The solid food composition according to any one of the above <3-1> to <3-7>, wherein the form is preferably powder, granular, tablet, rod, plate, or block.
<3-9> The solid food composition according to any one of the above <3-1> to <3-8>, wherein the component (A) is preferably at least one selected from the group consisting of 3-caffeoylquinic acid, 4-caffeoylquinic acid, 5-caffeoylquinic acid, 3-feruloylquinic acid, 4-feruloylquinic acid, 5-feruloylquinic acid, 3,4-dicaffeoylquinic acid, 3,5-dicaffeoylquinic acid, and 4,5-dicaffeoylquinic acid, and more preferably all nine of the above.
<4-1> A liquid food composition, comprising the following components (A) and (B);
   (A) 0.001% by mass or more of chlorogenic acids, and
   (B) L-tryptophan,
   wherein a mass ratio of component (A) and component (B), (B)/(A)], is from 0.0015 to 0.007.
<4-2> The liquid food composition according to the above <4-1>, wherein a content of the component (A) is preferably from 0.03 to 0.1% by mass.
<4-3> The liquid food composition according to the above <4-1>, wherein a content of the component (A) is preferably from 0.039 to 0.1% by mass.
<4-4> The liquid food composition according to any one of the above <4-1> to <4-3>, wherein a content of the component (B) is preferably from 0.5 to 30 ppm by mass.
<4-5> The liquid food composition according to any one of the above <4-1> to <4-3>, wherein a content of the component (B) is preferably from 2.0 to 25 ppm by mass.
<4-6> The liquid food composition according to any one of the above <4-1> to <4-5>, wherein the mass ratio [(B)/(A)] is preferably from 0.003 to 0.007.
<4-7> The liquid food composition according to any one of the above <4-1> to <4-6>, wherein the pH is preferably from 3.0 to 5.5.
<4-8> The liquid food composition according to any one of the above <4-1> to <4-7>, wherein the pH is preferably from 3.0 to 5.0.
<4-9> The liquid food composition according to any one of the above <4-1> to <4-8>, which is preferably a beverage (single strength).
<4-10> The liquid food composition according to any one of the above <4-1> to <4-9>, wherein the component (A) is preferably at least one selected from the group consisting of 3-caffeoylquinic acid, 4-caffeoylquinic acid, 5-caffeoylquinic acid, 3-feruloylquinic acid, 4-feruloylquinic acid, 5-feruloylquinic acid, 3,4-dicaffeoylquinic acid, 3,5-dicaffeoylquinic acid, and 4,5-dicaffeoylquinic acid, and more preferably all nine of the above.

### Examples

### 1. Analysis of Chlorogenic acids

A HPLC was used as an analyzer. The model numbers of component units in the analyzer are as follows:
- UV-VIS detector: L-2420 (Hitachi High-Technologies Corporation),
- Column oven: L-2300 (Hitachi High-Technologies Corporation),
- Pump: L-2130 (Hitachi High-Technologies Corporation),
- Autosampler: L-2200 (Hitachi High-Technologies Corporation),
- Columns: Cadenza CD-C18, inner diameter 4.6mm× length 150mm, particle size 3µm (Imtact Co., Ltd.)

Analysis conditions are as follows:
- Sample injection volume: 10 µL
- Flow rate: 1.0mL/min
- Predetermined wavelength of UV-VIS detector :325nm,
- Predetermined temperature of column oven 35°C
- Eluent A:0.05M acetic acid, 0.1 mM 1-hydroxyethane-1,1-diphosphonic acid, 10mM sodium acetate, 5(V/V)% acetonitrile solution
- Eluent B: Acetonitrile

| Concentration Gradient Conditions (vol%) | | |
|---|---|---|
| Time | Eluent A | Eluent B |
| 0.0 min | 100% | 0% |
| 10.0 min | 100% | 0% |
| 15.0 min | 95% | 5% |
| 20.0 min | 95% | 5% |
| 22.0 min | 92% | 8% |
| 50.0 min | 92% | 8% |
| 52.0 min | 10% | 90% |
| 60.0 min | 10% | 90% |
| 60.1 min | 100% | 0% |
| 70.0 min | 100% | 0% |

- 3-caffeoylquinic acid: 5.3min
- 5-caffeoylquinic acid: 8.8min
- 4-caffeoylquinic acid: 11.6min
- 3-feruloylquinic acid: 13.0min
- 5-feruloylquinic acid: 19.9min
- 4-feruloylquinic acid: 21.0min
- 3,4-dicaffeoylquinic acid: 36.6min
- 3,5-dicaffeoylquinic acid: 37.4min
- 4,5-dicaffeoylquinic acid: 44.2min

Using 5-caffeoylquinic acid (Tokyo Chemical Industry, Co., Ltd.) as a standard substance, the content (% by mass) of chlorogenic acids was determined from the area % determined in the foregoing.

### 2. Analysis of L-tryptophan

UPLC was used as an analyzer. The model numbers of component units in the analyzer are as follows:

Analysis was conducted under the following conditions.

| | |
|---|---|
| • Model: | Waters ACQUITY UPLC H-Class TUV System |
| • Column: | AccQ/Tag^{™} Ultea Column |
| • Column temperature: | 60°C |
| • Mobile phase: | C:AccQ/Tag Ultra EluentA2 |
| | D:AccQ/Tag Ultra EluentB |
| • Flow rate: | 0.7mL/min |
| • Injection volume: | :1µL |

### 3. Measure of pH

The samples were measured by adjusting a temperature to 20° C using a pH meter (HORIBA Compact pH meter, manufactured by Horiba, Ltd.) .

### 4. Sensory Test

Four specialist panels conducted sensory tests on the "intensity of astringent taste" and "intensity of bitterness" of each powdered food and packaged beverage. Sensory tests were conducted upon agreement that each panelist uses the following criteria. The expert panel then determined the final score based on discussion.

### (1) Criteria for intensity of astringent taste

With respect to the powdered food, the intensity of astringent taste of the powdered food in Example 3 is regarded as "5", the intensity of astringent taste of the powdered food in Example 5 is regarded as "3", and the intensity of astringent taste of the powdered food in Comparative Example 5 is regarded as "1".

For the packed beverage, the intensity of astringent taste of the packaged beverage in Example 16 is regarded as "5", the intensity of astringent taste of the packaged beverage in Example 13 is regarded as "3", and the intensity of astringent taste of the packaged beverage in Comparative Example 10 is regarded as "1".

Specific evaluation criteria are as follows.
5: No astringent taste is felt (equivalent to or greater than Example 3 or Example 16)
4: Low astringent taste is felt (superior to Example 5 or 13 but inferior to Example 3 or 16)
3: Slightly low astringent taste is felt (equivalent to Example 5 or 13)
2: Slightly strong astringent taste is felt (superior to Comparative Example 5 or Comparative Example 10 but inferior to Example 5 or Example 13)
1: Strong astringent taste is felt (equivalent to or less than Comparative Example 1 or Comparative Example 10)

### (2)Evaluation criteria of intensity of bitterness

With respect to the powdered food, the intensity of the bitterness of the powdered food in Example 3 is regarded as a score "5", the intensity of the bitterness of the powdered food in Example 1 is regarded as a score "3", and the intensity of the bitterness of the powdered food in Comparative Example 2 is regarded as a score "1".

For thepackedbeverage, the intensity of bitterness of thepackaged beverage in Example 16 is regarded as "5", the intensity of bitterness of the packaged beverage in Example 10 is regarded as "3", and the intensity of bitterness of the packaged beverage in Comparative Example 8 is regarded as "1".

Specific evaluation criteria are as follows.
5: No bitterness is felt (equivalent to or greater than Example 3 or Example 16)
4: Low bitterness is felt (superior to Example 1 or Example 10 but inferior to Example 3 or Example 16)
3: Slightly low bitterness is felt (equivalent to Example 1 or Example 10)
2: Slightly strong bitterness is felt (superior to Comparative Example 2 or Comparative Example 8 but inferior to Example 1 or Example 10) .
1: Strong bitterness is felt (equivalent to or less than Comparative Example 1 or Comparative Example 8)

### Examples 1 to 9, 22 and 23, as well as Comparative Examples 1 to 6

The components were mixed at the ratios shown in Table 1 to prepare a powdered food. The analysis results and sensory evaluation of the obtained powdered food are also shown in Table 1. The solids of the powdered food of Example 26 was 96 % by mass, and the solids of the powdered food in the other examples and the comparative example was 98% by mass.

**Table 1**

| | | | Example 1 | Example 2 | Example 3 | Example 4 | Example 22 | Example 23 | Example 5 | Example 6 | Example 7 | Example 8 | Example 9 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|---|---|
| Fomulation | Chlorogenic acid reagent ¹⁾ | [part by mass] | 99.990 | 99.800 | 99.700 | 99.500 | 99.700 | 99.500 | 99.000 | 99.990 | 99.900 | 99.000 | 99.000 | 99.999 | 99.999 | 99.999 | 96.000 | 96.000 | 96.000 |
| | L-tryptophan reagent ²⁾ | [part by mass] | 0.010 | 0.20 | 0.30 | 0.50 | 0.60 | 0.80 | 1.0 | 0.010 | 0.10 | 1.0 | 1.0 | 0.0010 | 0.0010 | 0.0010 | 4.0 | 4.0 | 4.0 |
| | Dextrin | [part by mass] | 200 | 200 | 200 | 200 | 200 | 200 | 200 | 30 | 750 | 30 | 750 | 200 | 30 | 750 | 200 | 30 | 750 |
| Analysis or Calculation | (A) Chlorogenic acids | [% by mass] | 32.7 | 32.6 | 32.6 | 32.5 | 32.5 | 32.5 | 32.3 | 75.4 | 11.5 | 74.6 | 11.4 | 32.7 | 75.4 | 11.5 | 31.4 | 72.4 | 11.1 |
| | (B) L-tryptophan | [% by mass] | 0.0033 | 0.067 | 0.10 | 0.17 | 0.20 | 0.27 | 0.33 | 0.0077 | 0.012 | 0.77 | 0.12 | 0.00033 | 0.00077 | 0.00012 | 1.3 | 3.1 | 0.47 |
| | Mass ratio [(B)/(A)] | ×1/1000³⁾ | 0.102 | 2.04 | 3.07 | 5.13 | 6.14 | 8.20 | 10.3 | 0.102 | 1.04 | 10.3 | 10.3 | 0.010 | 0.010 | 0.010 | 42.5 | 42.5 | 42.4 |
| Evaluation | Intensity of astringent taste | | 5 | 5 | 5 | 4 | 4 | 3 | 3 | 5 | 5 | 3 | 3 | 5 | 5 | 5 | 2 | 1 | 2 |
| | Intensity of bitterness | | 3 | 5 | 5 | 5 | 5 | 5 | 5 | 3 | 5 | 5 | 5 | 2 | 1 | 2 | 5 | 5 | 5 |

| | | | | | | | | | | | | | | | | | | | |
|---|---|---|---|---|---|---|---|---|---|---|---|---|---|---|---|---|---|---|---|
| 1) Chlorogenic acid hydrate, manufactured by Tokyo Chemical Industry Co., Ltd., 98.0% pure 2) L-tryptophan, manufactured by Wako Pure Chemical Industries, Ltd., 100% pure 3) Mass ratio [(B)/(A)] is the value obtained by multiplying the numerical value in table by 1/1000 | | | | | | | | | | | | | | | | | | | |

### Examples 10 to 21, 24 and 25, as well as Comparative Examples 7 to 10

A beverage (single strengths) was prepared by blending the components shown in Table 2. Then, the beverage was filled into a PET bottle having a volume of 200mL, and was subjected to heat sterilization (post-mix method) . Sterilization was conducted at 65 °C for 20 minutes. The analysis results and sensory evaluation of the obtained packaged beverage are also shown in Table 2.

**Table 2**

| | | | Example 10 | Example 11 | Example 12 | Example 13 | Example 14 | Example 15 | Example 16 | Example 24 | Example 25 | Example 17 | Example 18 | Example 19 | Example 20 | Example 21 | Comparative Example 7 | Comparative Example 8 | Comparative Example 9 | Comparative Example 10 |
|---|---|---|---|---|---|---|---|---|---|---|---|---|---|---|---|---|---|---|---|---|
| Formulation | Chlorogenic acid reagent ¹⁾ | [% by mass] | 0.040 | 0.040 | 0.040 | 0.040 | 0.100 | 0.100 | 0.100 | 0.100 | 0.100 | 0.100 | 0.500 | 0.500 | 0.500 | 0.500 | 0.040 | 0.500 | 0.040 | 0.500 |
| | L-tryptophan reagent ²⁾ | [ppmby mass] | 0.040 | 0.400 | 2.00 | 4.00 | 0.100 | 1.00 | 5.00 | 6.00 | 8.00 | 10.0 | 0.500 | 5.00 | 25.0 | 50.0 | 0.004 | 0.050 | 20.0 | 250 |
| | Water | [% by mass] | Balance | Balance | Balance | Balance | Balance | Balance | Balance | Balance | Balance | Balance | Balance | Balance | Balance | Balance | Balance | Balance | Balance | Balance |
| | Total | [% by mass] | 100 | 100 | 100 | 100 | 100 | 100 | 100 | 100 | 100 | 100 | 100 | 100 | 100 | 100 | 100 | 100 | 100 | 100 |
| Analysis or Calculation | (A) Chlorogenic acids | [% by mass] | 0.039 | 0.039 | 0.039 | 0.039 | 0.098 | 0.098 | 0.098 | 0.098 | 0.098 | 0.098 | 0.490 | 0.490 | 0.490 | 0.490 | 0.039 | 0.490 | 0.039 | 0.490 |
| | (B) L-tryptophan | [ppmby mass] | 0.040 | 0.400 | 2.00 | 4.00 | 0.100 | 1.00 | 5.00 | 6.00 | 8.00 | 10.0 | 0.500 | 5.00 | 25.0 | 5.00 | 0.004 | 0.050 | 2.00 | 250 |
| | Mass ratio [(B)/ (A)] | ×1/1000³⁾ | 0.103 | 1.03 | 5.13 | 10.3 | 0.10 | 1.02 | 5.10 | 6.12 | 8.16 | 10.2 | 0.102 | 1.02 | 5.10 | 10.2 | 0.010 | 0.010 | 51.3 | 51.0 |
| Evaluation | pH | | 3.0 | 3.1 | 3.2 | 3.3 | 3.0 | 3.1 | 3.2 | 3.2 | 3.3 | 3.3 | 3.0 | 3.1 | 3.2 | 3.3 | 3.0 | 3.0 | 3.4 | 3.4 |
| | Intensity of astringent taste | | 5 | 5 | 5 | 3 | 5 | 5 | 5 | 5 | 4 | 3 | 5 | 5 | 5 | 3 | 5 | 5 | 2 | 1 |
| | Intensity of bitterness | | 3 | 4 | 5 | 5 | 3 | 4 | 5 | 5 | 5 | 5 | 3 | 4 | 5 | 5 | 2 | 1 | 5 | 5 |

| | | | | | | | | | | | | | | | | | | | | |
|---|---|---|---|---|---|---|---|---|---|---|---|---|---|---|---|---|---|---|---|---|
| 1) Chlorogenic acid hydrate, manufactured by Tokyo Chemical Industry Co., Ltd., 98.0% pure 2) L-tryptophan, manufactured by Wako Pure Chemical Industries, Ltd., 100% pure 3) Mass ratio [(B)/(A)] is the value obtained by multiplying the numerical value in the table by 1/1000 | | | | | | | | | | | | | | | | | | | | |

### Production Example 1

### Manufacture of chlorogenic acids preparation

Roasted coffee beans (production area: Vietnam) of L29 were ground, and 6 cylindrical extraction towers (inner diameter: 160 mm × height: 660mm) were filled so that the filling amount per tower was 4.2kg. Then, the hot water at 95 °C was fed from the lower part of an extraction column tower of the first stage to the upper part. Next, the coffee extract solution discharged from the upper part of an extraction column tower of the first stage was fed from the lower part of the extraction column tower of the second stage to the upper part. This operation was repeated for the extraction tower of the third and subsequent stages, and the coffee extract solution discharged from the upper portion of the extraction tower of the sixth stage was rapidly cooled and recovered. The obtained extract solution was concentrated by heating under reduced pressure by using a rotary evaporator (N-1100V type, manufactured by Tokyo Rikakikai Co., Ltd.) at 30 torr and 50 °C to obtain concentrated compositions having Brix10. The resulting concentrated composition was used in a spray dryer to obtain a solid chlorogenic acids prepation.

### Example 26 as well as Comparative Examples 11 and 12

The components were mixed at the ratios shown in Table 3 to prepare a powdered food. The analysis results and sensory evaluation of the obtained powdered food are also shown in Table 3. The solids of the powdered food in Example 26 was 98% by mass.

**Table 3**

| | | | Examples 26 | Comparative Example 11 | Comparative Example 12 |
|---|---|---|---|---|---|
| Formulation | Chlorogenic acid preparation ⁴⁾ | [part by mass] | 80.00 | 80.00 | - |
| | Chlorogenic acid reagent ¹⁾ | [part by mass] | - | - | 11.84 |
| | L-tryptophan reagent ²⁾ | [part by mass] | 0.03 | | - |
| | Dextrin | [part by mass] | 19.97 | 20.00 | 88.16 |
| Analysis or Calculation | (A) Chlorogenic acids | [% by mass] | 11.6 | 11.6 | 11.6 |
| | (B) L-tryptophan | [% by mass] | 0.0306 | 0.00056 | - |
| | Mass ratio [(B)/(A)] | ×1/1000³⁾ | 2.634 | 0.048 | - |
| Evaluation | Intensity of astringent taste | | 5 | 5 | 1 |
| | Intensity of bitterness | | 5 | 2 | 5 |

| | | | | | |
|---|---|---|---|---|---|
| 1) Chlorogenic acid hydrate, manufactured by Tokyo Chemical Industry Co., Ltd., 98.0% pure 2) L-tryptophan, manufactured by Wako Pure Chemical Industries, Ltd., 100% pure 3) Mass ratio [(B)/(A)] is the value obtained by multiplying the numerical value in the table by 1/1000 4) Chlorogenic acid preparation obtained in Preparation Example 1, chlorogenic acid 14.5%, L-tryptophan 0.7% | | | | | |

### Example 27 as well as Comparative Examples 13 and 14

A beverage (single strengths) was prepared by blending the components shown in Table 4. Then, the beverage was filled into a PET bottle having a volume of 200mL, and was subjected to heat sterilization (post-mix method) . Sterilization was conducted at 65 °C for 20 minutes. The analysis results and sensory evaluation of the obtained packaged beverage are also shown in Table 4.

**Table 4**

| | | | Examples 27 | Comparative Example 13 | Comparative Examples 14 |
|---|---|---|---|---|---|
| Formulation | Chlorogenic acid preparation ⁴⁾ | [% by mass] | 1.000 | 1.000 | - |
| | Chlorogenic acid reagent ¹⁾ | [% by mass] | - | - | 0.148 |
| | L-tryptophan reagent ²⁾ | [ppmby mass] | 0.750 | - | - |
| | Water | [% by mass] | Balance | Balance | Balance |
| | Total | [% by mass] | 100 | 100 | 100 |
| Analysis or Calculation | (A) Chlorogenic acids | [% by mass] | 0.145 | 0.145 | 0.145 |
| | (B) L-tryptophan | [ppmby mass] | 0.757 | 0.007 | - |
| | Mass ratio [(B)/(A)] | ×1/1000³⁾ | 5.221 | 0.048 | - |
| Evaluation | pH | | 5.3 | 5.3 | 2.9 |
| | Intensity of astringent taste | | 5 | 5 | 1 |
| | Intensity of bitterness | | 5 | 2 | 5 |

| | | | | | |
|---|---|---|---|---|---|
| 1) Chlorogenic acid hydrate, manufactured by Tokyo Chemical Industry Co., Ltd., 98.0% pure 2) L-tryptophan, manufactured by Wako Pure Chemical Industries, Ltd., 100% pure 3) Mass ratio [(B)/(A)] is the value obtained by multiplying the numerical value in the table by 1/1000 4) Chlorogenic acid preparation obtained in Preparation Example 1, chlorogenic acid 14.5%, L-tryptophan 0.7% | | | | | |

From Tables 1 to 4, it found that by containing L-tryptophan in a specific mass ratio with respect to a specific amount of chlorogenic acids, it is possible to suppress the astringent taste of chlorogenic acids while suppressing the bitterness of L-tryptophan.

## Claims

1. A food composition, comprising following components (A) and (B);
(A) 0.001% by mass or more of chlorogenic acids, and
(B) L-tryptophan,
wherein a mass ratio of component (A) and component (B), [(B)/(A)], is from 0.00005 to 0.03.

2. The food composition of claim 1, wherein the food composition is a solid food composition.

3. The food composition according to claim 2, wherein a content of the component (A) is from 10 to 35% by mass.

4. The food composition according to any one of claims 2 to 3, wherein the content of component (B) is from 0.001 to 1.0% by mass.

5. The food composition according to any one of claims 2 to 3, wherein the content of component (B) is from 0.001 to 0.12% by mass.

6. The food composition according to any one of claims 2 to 5, wherein the mass ratio [(B)/(A)] is from 0.0005 to 0.010.

7. The food composition according to any one of claims 2 to 5, wherein the mass ratio [(B)/(A)] is from 0.0009 to 0.005.

8. The food composition of claim 1, wherein the food composition is a beverage.

9. The food composition according to claim 8, wherein the content of component (A) is from 0.039 to 0.1% by mass.

10. The food composition according to any one of claims 8 to 9, wherein the content of component (B) is from 2.0 to 25 ppm by mass.

11. The food composition according to any one of claims 8 to 10, wherein the mass ratio [(B)/(A)] is from 0.0005 to 0.009.

12. The food composition according to any one of claims 8 to 10, wherein the mass ratio [(B)/(A)] is from 0.003 to 0.007.

13. The food composition according to any one of claims 8 to 12, wherein the pH is from 2.0 to 8.0.

14. The use of a food composition comprising components (A) and (B) for suppressing astringent taste of chlorogenic acids and bitterness of L-tryptophan, wherein;
(A) is 0.001% by mass or more of chlorogenic acids, and
(B) is L-tryptophan
and components (A) and (B) are contained such that a mass ratio, [(B)/(A)], falls within a range of 0.00005 to 0.03.

## Patentansprüche

1. Lebensmittelzusammensetzung, die die folgenden Komponenten (A) und (B) umfasst:
(A) 0,001 Masse-% oder mehr an Chlorogensäuren, und
(B) L-Tryptophan,
wobei ein Massenverhältnis von Komponente (A) zu Komponente (B), [(B) / (A)], von 0,00005 bis 0,03 beträgt.

2. Lebensmittelzusammensetzung nach Anspruch 1, wobei die Lebensmittelzusammensetzung eine feste Lebensmittelzusammensetzung ist.

3. Lebensmittelzusammensetzung nach Anspruch 2, wobei ein Gehalt der Komponente (A) von 10 bis 35 Masse-% beträgt.

4. Lebensmittelzusammensetzung nach einem der Ansprüche 2 bis 3, wobei der Gehalt von Komponente (B) von 0,001 bis 1,0 Masse-% beträgt.

5. Lebensmittelzusammensetzung nach einem der Ansprüche 2 bis 3, wobei der Gehalt von Komponente (B) von 0,001 bis 0,12 Masse-% beträgt.

6. Lebensmittelzusammensetzung nach einem der Ansprüche 2 bis 5, wobei das Massenverhältnis [(B) / (A)] von 0,0005 bis 0,010 beträgt.

7. Lebensmittelzusammensetzung nach einem der Ansprüche 2 bis 5, wobei das Massenverhältnis [(B) / (A)] von 0,0009 bis 0,005 beträgt.

8. Lebensmittelzusammensetzung nach Anspruch 1, wobei die Lebensmittelzusammensetzung ein Getränk ist.

9. Lebensmittelzusammensetzung nach Anspruch 8, wobei der Gehalt von Komponente (A) von 0,039 bis 0,1 Masse-% beträgt.

10. Lebensmittelzusammensetzung nach einem der Ansprüche 8 bis 9, wobei der Gehalt von Komponente (B) von 2,0 bis 25 ppm Massenanteil beträgt.

11. Lebensmittelzusammensetzung nach einem der Ansprüche 8 bis 10, wobei das Massenverhältnis [(B) / (A)] von 0,0005 bis 0,009 beträgt.

12. Lebensmittelzusammensetzung nach einem der Ansprüche 8 bis 10, wobei das Massenverhältnis [(B) / (A)] von 0,003 bis 0,007 beträgt.

13. Lebensmittelzusammensetzung nach einem der Ansprüche 8 bis 12, wobei der pH-Wert von 2,0 bis 8,0 beträgt.

14. Verwendung der Lebensmittelzusammensetzung, die Komponenten (A) und (B) umfasst, zum Unterdrücken von astringentem Geschmack von Chlorogensäuren und Bitterkeit von L-Tryptophan, wobei:
(A) 0,001 Masse-% oder mehr an Chlorogensäuren ist, und
(B) L-Tryptophan ist
und Komponenten (A) und (B) derart enthalten sind, dass ein Massenverhältnis [(B) / (A)] in einen Bereich von 0,00005 bis 0,03 fällt.

## Revendications

1. Composition alimentaire comprenant les constituants (A) et (B) suivants ;
(A) supérieur ou égal à 0,001 % en masse d'acides chlorogéniques, et
(B) L-tryptophane,
dans laquelle un rapport de masse entre le constituant (A) et le constituant (B), [(B)/(A)], est de 0,00005 à 0,03.

2. Composition alimentaire selon la revendication 1, dans laquelle la composition alimentaire est une composition alimentaire solide.

3. Composition alimentaire selon la revendication 2, dans laquelle une teneur du constituant (A) est de 10 à 35 % en masse.

4. Composition alimentaire selon l'une quelconque des revendications 2 à 3, dans laquelle la teneur en constituant (B) est de 0,001 à 1,0 % en masse.

5. Composition alimentaire selon l'une quelconque des revendications 2 à 3, dans laquelle la teneur en constituant (B) est de 0,001 à 0,12 % en masse.

6. Composition alimentaire selon l'une quelconque des revendications 2 à 5, dans laquelle le rapport de masse [(B)/(A)] est de 0,0005 à 0,010.

7. Composition alimentaire selon l'une quelconque des revendications 2 à 5, dans laquelle le rapport de masse [(B)/(A)] est de 0,0009 à 0,005.

8. Composition alimentaire selon la revendication 1, dans laquelle la composition alimentaire est une boisson.

9. Composition alimentaire selon la revendication 8, dans laquelle la teneur en constituant (A) est de 0,039 à 0,1 % en masse.

10. Composition alimentaire selon l'une quelconque des revendications 8 à 9, dans laquelle la teneur en constituant (B) est de 2,0 à 25 ppm en masse.

11. Composition alimentaire selon l'une quelconque des revendications 8 à 10, dans laquelle le rapport de masse [(B)/(A)] est de 0,0005 à 0,009.

12. Composition alimentaire selon l'une quelconque des revendications 8 à 10, dans laquelle le rapport de masse [(B)/(A)] est de 0,003 à 0,007.

13. Composition alimentaire selon l'une quelconque des revendications 8 à 12, dans laquelle le pH est de 2,0 à 8,0.

14. Utilisation d'une composition alimentaire comprenant des constituants (A) et (B) pour supprimer le goût astringent des acides chlorogéniques et l'amertume du L-tryptophane, dans laquelle ;
(A) est supérieur ou égal à 0,001 % en masse d'acides chlorogéniques, et
(B) est le L-tryptophane
et les constituants (A) et (B) sont présents de sorte qu'un rapport de masse, [(B)/(A)], se situe dans une plage de 0,00005 à 0,03.
